# EUROPÄISCHE PATENTSCHRIFT

(11) **EP 0 342 318 B1**
(45) Veröffentlichungstag und Bekanntmachung des Hinweises auf die Patenterteilung: **11.08.1993**
(21) Anmeldenummer: 89103420.9
(22) Anmeldetag: 27.02.1989
(51) Int. Cl.: H04N 17/04, H01J 9/44

(54) **Automatischer Bildschärfeabgleich von Bildröhren**
Automatic sharpness adjustment for picture tubes
Ajustement automatique de la netteté pour tubes images

(30) Priorität: 22.03.1988 DE 3809602
(43) Veröffentlichungstag der Anmeldung: 23.11.1989
(73) Patentinhaber: SIEMENS AKTIENGESELLSCHAFT, 80333 München (DE)
(72) Erfinder: Froese-Peeck, Rüdiger, Dipl.-Ing., D-8000 München 70 (DE); Poleschinski, Richard, Dipl.-Ing., D-8000 München 70 (DE)

(56) Entgegenhaltungen:
- EP-A- 0 119 282
- FR-A- 2 497 399
- US-A- 4 163 308
- FUNKSCHAU FERNSEHGERÄTE-PRODUKTION, Band 58, Nr. 5, Februar 1986, Seiten 40-42; D. BEISSE: "Geometrieabgleich mit Kamera und Computer"
- PATENT ABSTRACTS OF JAPAN, Band 10, Nr. 297 (E-444)[2353], 9. Oktober 1986; & JP-A-61 114 437 (TOSHIBA CORP.) 02-06-1986
- 1987 SID INTERNATIONAL SYMPOSIUM, Digest of Technical Papers, New York, 1987, Seiten 211-213, SID; H. VERON et al.: "A technique for the automated measurement of the resolution of shadow-mask CRT displays"

## Beschreibung

Die Erfindung betrifft ein Verfahren nach dem Oberbegriff des Anspruchs 1. Ein solches Verfahren ist beispielsweise aus der Druckschrift : Funkschau Fernsehgeräte-Produktion , Band 58, Nr. 5, Februar 1986, S.40- 42; D. Beisse : Geometrieabgleich mit Kamera und Computer bekannt.

In vielen Prozeßabläufen werden auf Fernsehmonitoren Bilder, Schriften und Graphiken dargestellt. Hierzu wird eine optimale Bildschärfe benötigt. Da die Bildschärfe an verschiedenen Stellen des Bildschirms unterschiedlich sein kann, muß der gesamte Bildinhalt zur Beurteilung der Bildschärfe herangezogen werden.

Bisher konnte dieser Vorgang nur mit einem sehr hohen apparativen Aufwand automatisiert werden.

Bei der Fertigung von Monitoren und Fernsehgeräten müssen nicht nur elektrische Werte geprüft und eingestellt werden, sondern es müssen auch die Bildgeometrie und andere Bildparameter eingestellt werden.

Die Automatisierung des Bildabgleichs soll nicht nur die Wirtschaftlichkeit der Fertigung erhöhen, sondern auch Qualitätsverbesserungen erbringen.

Die Ermittlung von zum Beispiel Bildhöhe, Bildbreite, Bildlage und Bildhelligkeit kann mit bekannten Sensorsystemen durchgeführt werden. Dagegen ist eine automatische Ermittlung der Bildschärfe nur schwer realisierbar oder mit erheblichem Aufwand verbunden.

Ein weiteres Problem ergibt sich, wenn die Bildaufnahme an verschiedenen Monitoren oder Fernsehgeräten erfolgen soll. Es gibt Fernsehgeräte, die entweder mit 50 Hz oder 60 Hz-Halbbild-Wechselfrequenz arbeiten. In einer Monitor-Montagelinie sollen beispielsweise Monitore mit drei verschiedenen Bildwechselfrequenzen abgeglichen werden. Für die hier benötigte, automatische

Bildaufnahme ist die aufnehmende Kamera mit den verschiedenen Monitoren zu synchronisieren.

Bisher wurde in den meisten Fällen der Bildschirm mit dem Auge betrachtet. Bei ausreichender Einarbeitung kann der Mitarbeiter am Bildschirm den Unterschied zwischen der Bildschärfe am Rand und der in der Mitte erkennen. Die Einstellung der Bildschärfe erfolgt durch Justierung eines Potentiometers an der Ablenkbaugruppe.

Bei einer automatischen Erfassung der Bildschärfe werden nach bekannten Verfahren zum Beispiel mit einer Halbleiterkamera Meßmarken auf einem Teil des Monitorbildes aufgenommen. Mit einer speziellen, aufwendigen Hardware-Logik wird das Kamerasignal ausgewertet und die Bildschärfe erfaßt.

Wenn Monitore mit verschiedenen Bildwechselfrequenzen abgeglichen werden sollen, kann die erwähnte Lösung für 50 Hz-Monitore nur prinzipiell eingesetzt werden. Mit einer Weiterentwicklung müßte
die Messung der Bildschärfe des gesamten Bildinhalts und die Erweiterung der Hardwareschaltung derart erfolgen, daß eine schnelle Anpassung an die verschiedenen Bildwechselfrequenzen möglich ist.

Es ist auch bekannt, mit einem aufwendigen Bildverarbeitungssystem die Bildschärfe über die Gradienten-Verteilung im Graubild zu erfassen. Neben den hohen Hardware- und Softwarekosten besteht hier wie auch bei dem obengenannten Lösungsweg der Nachteil, daß mit vielen Messungen an verschiedenen Bildschirmstellen ein Bildschärfe-Mittelwert ermittelt werden muß. Damit wird die Dauer der Bildschärfe-Erfassung meist zu lang. Bei der Fertigungsautomatisierung sind Zeiten von einigen 100 Millisekunden anzustreben.

Der Erfindung liegt die Aufgabe zugrunde, ein Verfahren zur Automatisierung des Bildabgleichs von Bildröhren zu konzipieren, das auch einsetzbar ist, wenn die Bildaufnahme zum Beispiel an verschiedenen Monitoren oder Fernsehgeräten erfolgen soll, die zum Beispiel mit drei verschiedenen Bildwechselfrequenzen abgeglichen werden.

Die der Erfindung zugrundeliegende Aufgabe wird durch das Merkmal des kennzeichnenden Teils des Anspruchs 1 gelöst. Vorteilhafte Ausführungsformen und Weiterbildungen der Erfindung sind in den Unteransprüchen angegeben.

Der Abbildungsmaßstab ist so zu wählen, daß die Bildpunkte des Monitors mit zweifacher Auflösung bezogen auf die Linienauflösung der Kamera aufgenommen werden.

Der wesentliche Vorteil der Erfindung besteht darin, daß die Bildschärfe ohne umfangreichen Elektronik-Hardware-Aufwand mit heute üblichen Bildaufnahme- und Bildverarbeitungssystemen durch entsprechende Programme, an Monitoren oder Fernsehgeräten mit unterschiedlichen Bildwechselfrequenzen ermittelt werden kann.

Die Erfindung wird anhand der Figuren erläutert. Es zeigen
- Figur 1: ein Prinzipbild,
- Figur 2: diesen schematischen Aufbau mit mehreren Kameras und
- Figur 3: eine Histogrammkurve.

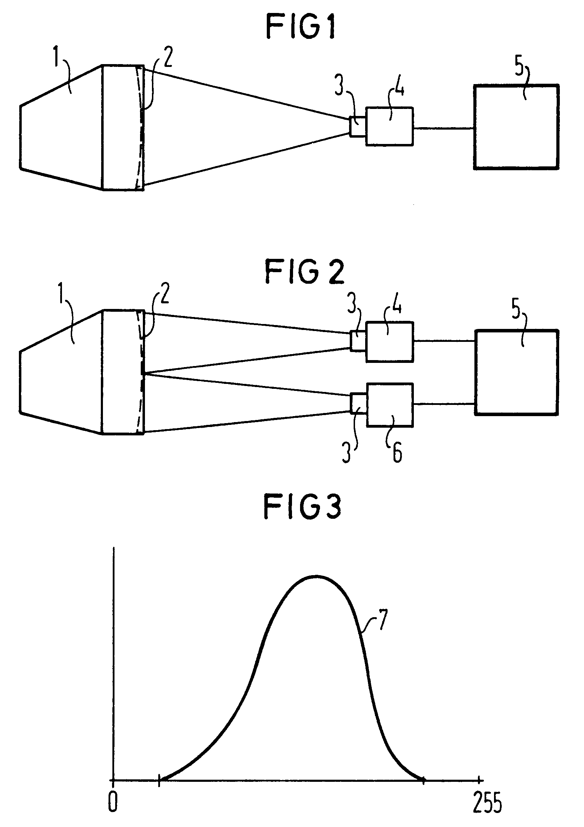

In der Figur 1 ist mit 1 ein Monitor bezeichnet. Das Bild auf dem Bildschirm 2 wird über eine Optik 3 von einer Kamera 4 aufgenommen. Die von der Kamera abgegebenen Werte werden in einer Auswertelogik 5 verarbeitet.

Die Figur 2 unterschiedet sich nur insofern von der Figur 1, daß bei diesem Aufbau mehrere Kameras 4, 6 verwendet werden.

In der Figur 3 sind auf der x-Achse die Grauwerte des Bildes und auf der y-Achse die Anzahl der Bildpunkte aufgetragen. Die Histogrammkurve ist mit 7 bezeichnet.

Auf dem abzugleichenden Monitor wird ein spezielles Bild erzeugt. Hier wurde eine Punktestruktur ähnlich einem feinen Schachbrettmuster verwendet. Es lassen sich auch andere Strukturen wie z.B. Linienstrukturen verwenden. Zweck dieses speziellen Bildes ist es, möglichst viele Hell-Dunkel-Übergänge am Bildschirm zu erzeugen. Unter dem Begriff "möglichst viele Hell-Dunkel-Übergänge" ist zu verstehen, daß am Bildschirm feinste Strukturen dargestellt werden, die aufgrund der technischen Ausführung des abzugleichenden Monitors abbildbar sind.

Das Monitorbild wird mit einer Halbleiterkamera 4, 6 aufgenommen. Der Bildausschnitt und damit die Auflösung ist so zu wählen, daß die feine Punktestruktur im Kamerasignal mit voller Auflösung erfaßt wird. Die hier verwendeten Kameras mit CCD-Halbleiter-Sensoren haben auf dem Sensor-Chip eine bestimmte Anzahl von photoempfindlichen Flächenelementen (Pixel). Ähnlich der Definition der vertikalen und horizontalen Auflösung von Fernsehbildern wird zu jeder Kamera die Linienauflösung angegeben. Diese Auflösung hängt nicht nur von der Pixelanzahl ab, sondern auch von der Bandbreite des nachfolgenden Kamera-Videoverstärkers. Die hier benötigte Auflösung wird zum Beispiel dann erreicht, wenn die Monitor-Punktestruktur mit doppelter Auflösung, bezogen auf die Kamera-Auflösung, aufgenommen wird.

Das Kamerasignal wird mit einem bekannten Bildverarbeitungssystem ausgewertet. Das Bildverarbeitungssystem wird auch dafür verwendet, um mit Hilfe anderer Testbilder am Bildschirm Bildlage, Bildhöhe, Bildbreite usw. zu ermitteln.

Die Bildschärfe des von der Kamera aufgenommenen Graubildes wird nun mit Hilfe des Histogramms ermittelt, zum Beispiel in einem Binärbildsystem nach folgender Methode:

Bei der Schwellwertstufe n wird die Anzahl der Bildpunkte gebildet (Summe m), deren Spannungswerte im Graubild über dem Schwellwert n liegen. Anschließend wird der Schwellwert um einen Wert erhöht und die Summe (m + 1) der Bildpunkte ermittelt, deren Spannungswerte über dem Schwellwert (n + 1) liegen. Aus der Differenz (m + 1) und m ergibt sich die Höhe des darzustellenden Balkens für den Grauwert n im Histogramm. Diese Berechnung wird für die Grauwertstufen 0 bis 255 durchgeführt (Figur 3). Die Breite der Histogrammkurve kann ein Maß für die Bildschärfe sein.

Bei unscharfem Bild kann zum Beispiel mit einer passenden Vorrichtung das zugehörige Potentiometer an der Ablenkbaugruppe des Monitors verstellt werden. Wenn zum Beispiel ein elektromotorischer Schrauber am Greifer eines Roboters befestigt wird, kann die für einen bestimmten Zweck benötigte Flexibilität erreicht werden. Die verschiedenen Monitore unterscheiden sich nicht nur durch die Größe, auch die Potentiometer befinden sich auf der jeweiligen Ablenkbaugruppe an unterschiedlicher Position.

Wenn das gesamte von der Kamera aufgenommene Graubild im Bildverarbeitungssystem abgespeichert wird, kann die Histogrammberechnung in kurzer Zeit erfolgen (einige hundert Millisekunden). Damit wird eine für die Fertigungsautomatisierung notwendige kurze Erfassungszeit der Bildschärfe erreicht.

Durch Aufnahme des Bildschirms mit mehreren Kameras bei der oben erwähnten Vergrößerung bzw. Auflösung und der jeweiligen Histogrammberechnung kann ein Mittelwert der Bildschärfe für das gesamte Monitor-Bild berechnet werden.

Um eine störungsfreie Bildaufnahme von verschiedenen Monitor- oder Fernsehgerätetypen, die mit unterschiedlichen Bildwechselfrequenzen arbeiten, mit kostengünstigen, handelsüblichen Videokameras, die normalerweise mit 50 Hz oder 60 Hz Bildwechselfrequenz (Halbbild) betrieben werden, zur erreichen, muß die Zeilenrichtung der aufnehmenden Kameras um 90° zu der Zeilenrichtung des Monitors angeordnet werden. Außerdem ist eine einfache Synchronisierung der Bildaufnahme zu realisieren.

## Patentansprüche

1. Verfahren zur automatischen Ermittlung der Bildschärfe an Bildröhren, insbesondere an Monochrom- oder Farbmonitoren, die mittels eines Elektronenstrahles den Bildschirm (2) in Form von parallelen Linien abtasten, wobei an der Ablenkbaugruppe des Monitores ein Potentiometer zur Scharfeinstellung vorhanden ist,
**gekennzeichnet durch** folgende Schritte:
- auf dem Bildschirm (2) eines Monitores (1) wird ein einziges spezielles Bild mit einer optimalen Anzahl von Hell-Dunkel-Übergängen in Form eines feinen Schachbrettmusters oder eines Linienmusters erzeugt,
- das Bild wird mittels einer Halbleiterkamera (4) aufgenommen, wobei der Abbildungsmaßstab bei der Bildaufnahme die Punktestruktur des Monitors im Kamerasignal mindestens mit zweifacher Auflösung erfaßt,
- das entstandene Kamerasignal wird mit einer Auswertelogik (5) in Bezug auf die Bildschärfe in vertikaler und horizontaler Richtung mittels einer Histogrammberechnung ausgewertet, wobei die Breite der aufgrund von Grauwertstufen ermittelten Histogrammkurve ein Maß für die Bildschärfe ist und die Scharfeinstellung über das Potentiometer an der Ablenkbaugruppe des Monitors (1) geschieht.

2. Verfahren nach Anspruch 1, **dadurch gekennzeichnet,** daß als Verstellmittel ein elektromotorischer Schrauber manuell, oder am Greifer eines Industrie-Roboters befestigt, verwendet wird.

3. Verfahren nach Anspruch 1, **dadurch gekennzeichnet,** daß bei der Verwendung einer elektronischen Bildschärfeeinstellung anstelle eines Potentiometers über eine elektronische Schnittstelle der Sollwert der Bildschärfe in die Elektronik des Monitors eingegeben wird.

4. Verfahren nach einem der vorhergehenden Ansprüche, **dadurch gekennzeichnet,** daß zur Ermittlung einer über dem Bildschirm gleichmäßig verteilten Bildschärfe ein Großteil des Bildschirms oder der gesamte Bildschirm aufgenommen wird, indem man mit mehreren Kameras Flächenelemente des Bildschirms aufnimmt und zur Ermittlung der Bildschärfe die Bildinformation aller Kameras heranzieht.

5. Verfahren nach einem der vorhergehenden Ansprüche, **dadurch gekennzeichnet,** daß die Zeilenrichtung der aufnehmenden Kameras (4, 6) um 90° zu der Zeilenrichtung des Monitors (1) angeordnet ist, um eine störungsfreie Bildaufnahme von verschiedenen Monitortypen, die mit unterschiedlichen Bildwechselfrequenzen arbeiten, mit Videokameras, die mit 50 Hz oder 60 Hz Bildwechselfrequenz betrieben werden, zu erreichen.

## Claims

1. Method for automatically determining the picture focus on picture tubes, preferably on monochrome or colour monitors which scan the screen (2) in the form of parallel lines by means of an electron beam, a potentiometer for focus adjustment being provided at the deflection assembly of the monitor, characterised by the following steps:
- a single special picture with an optimum number of light/dark transitions in the form of a fine chequer board pattern or of a line pattern is generated on the screen (2) of a monitor (1),
- the picture is picked up by means of a semiconductor camera (4), the imaging scale during the recording of the picture covering the dot structure of the monitor in the camera signal at least with twice the resolution,
- the camera signal produced is analysed by means of a histogram calculation with respect to the image focus in vertical and horizontal direction by means of an analysing logic (5), the width of the histogram curve determined on the basis of grey scale steps being a measure of the picture focus and the focus being adjusted via the potentiometer at the deflection assembly of the monitor (1).

2. Method according to Claim 1, characterised in that a screwdriver driven by an electric motor is used manually, or mounted on the gripper of an industrial robot, as adjusting means.

3. Method according to Claim 1, characterised in that when instead of a potentiometer, an electronic picture focus adjustment is used, the nominal value of the picture focus is input into the electronics of the monitor via an electronic interface.

4. Method according to one of the preceding claims, characterised in that, in order to determine a picture focus uniformly distributed over the screen, a large proportion of the screen or the total screen is recorded in that area elements of the screen are recorded by means of several cameras and the picture information of all cameras is used for determining the picture focus.

5. Method according to one of the preceding claims, characterised in that the direction of the lines of the pick-up cameras (4, 6) is arranged at 90° with respect to the direction of the lines of the monitor (1) in order to achieve interference-free picture recording from different monitor types which operate with different frame rates, by means of video cameras which are operated at a frame rate of 50 Hz or 60 Hz.

## Revendications

1. Procédé pour déterminer automatiquement la netteté de l'image dans des tubes images, notamment dans des moniteurs monochromes ou en couleurs, qui, au moyen d'un faisceau d'électrons, balayent l'écran (2) sous la forme de lignes parallèles, un potentiomètre permettant le réglage de la netteté étant présent dans le module de déviation du moniteur,
caractérisé par les étapes suivantes :
- sur l'écran (2) d'un moniteur (1), une image particulière unique comportant un nombre optimum de transitions clairsombre, est formée sous la forme d'un damier fin ou d'un modèle de lignes,
- l'image est enregistrée au moyen d'une caméra à semiconducteurs (4), l'échelle de grandissement lors de l'enregistrement de l'image détectant la structure de fond du moniteur dans le signal de la caméra, au moins avec une résolution double,
- le signal délivré par la caméra est évalué au moyen d'une unité logique d'évaluation (5), pour ce qui concerne la netteté de l'image, dans les directions verticale et horizontale à l'aide d'un calcul d'histogramme, la largeur de la courbe d'histogramme déterminée sur la base d'échelons de valeurs de gris étant une mesure de la netteté de l'image, et le réglage de la netteté étant réalisé au moyen du potentiomètre situé dans le module de déviation du moniteur (1).

2. Procédé suivant la revendication 1, caractérisé par le fait qu'on utilise comme moyens de réglage un tournevis à moteur électrique actionné manuellement ou fixé sur l'élément de préhension d'un robot industriel.

3. Procédé suivant la revendication 1, caractérisé par le fait que dans le cas de l'utilisation d'un réglage électronique de la netteté de l'image, la valeur de consigne de la netteté de l'image est introduite non pas au moyen d'un potentiomètre, mais par l'intermédiaire d'une interface électronique, dans le système électronique du moniteur.

4. Procédé suivant l'une des revendications précédentes, caractérisé par le fait que pour déterminer une netteté d'image répartie uniformément sur l'écran, on enregistre une majeure partie de l'écran ou de l'ensemble de l'écran, en enregistrant, à l'aide de plusieurs caméras, des éléments de surface de l'écran et en utilisant, pour la détermination de la netteté de l'image, l'information d'image fournie par toutes les caméras.

5. Procédé suivant l'une des revendications précédentes, caractérisé par le fait que la direction des lignes des caméras d'enregistrement (4,6) est décalée de 90° par rapport à la direction des lignes de moniteurs (1), pour l'obtention d'un enregistrement non perturbé de différents types de moniteurs, qui travaillent avec des fréquences d'images différentes, avec des caméras vidéo qui fonctionnent à des fréquences d'images de 50 Hz ou 60 Hz.
